# EUROPEAN PATENT APPLICATION

(11) **EP 1 491 249 A1**
(43) Date of publication of application: **29.12.2004**
(21) Application number: 03715396.2
(22) Date of filing: 25.03.2003
(51) Int. Cl.: B01D 39/20, B01D 46/00, F01N 3/02

(54) **FILTER FOR EXHAUST GAS DECONTAMINATION**

(30) Priority: 25.03.2002 JP 2002084377; 25.03.2002 JP 2002084378
(71) Applicant: Ibiden Co., Ltd., Ogaki-shi, Gifu 503-0917 (JP)
(72) Inventor: OHNO, Kazushige, c/o IBIDEN CO., LTD., Ibigawa-cho, Ibi-gun, Gifu 501-0601 (JP); TAOKA, Noriyuki, c/o IBIDEN CO., LTD., Ibigawa-cho, Ibi-gun, Gifu 501-0601 (JP)
(74) Representative: Grünecker, Kinkeldey, Stockmair & Schwanhäusser Anwaltssozietät
(86) International application number: PCT/JP2003/003601
(87) International publication number: WO 2003/080219

(57) **Abstract**

It is provide a filter for an exhaust gas having a high thermal conductivity irrespective of a relatively high porosity or showing characteristics that the whole of the filter containing a high refractive index substance or pigment is easily warmed but hardly cooled while making low the thermal conductivity of the filter as a whole. This filter is provided with a catalyst coat layer formed by carrying a catalyst active component on a surface of a porous ceramic carrier, in which a porosity of the porous ceramic carrier is 40-80% and a substance or a pigment indicating a thermal conductivity as the filter of 3-60 W/mk or having a large refractive index at a thermal conductivity of 0.3-3 W/mk.

## Description

### Identification of Related Application

This application is an application claiming Japanese Patent Applications 2002-84377 and 2002-84378 filed March 25, 2002 as a basic application.

### TECHNICAL FIELD

This invention relates to a filter for an exhaust gas, and particularly proposes a filter for an exhaust gas capable of efficiently conducting oxidation removal of carbon monooxide (CO) and hydrocarbon (HC) included in an exhaust gas of a diesel engine and reducing removal of nitrogen oxide (NOx).

### BACKGROUND ART

Recently, the number of automobiles is considerably increasing, and the amount of exhaust gas discharged from an internal combustion engine of the automobile goes on increasing in proportion thereto. Particularly, various substances included in the exhaust gas from the diesel engine cause atmospheric pollution, which gives a serious influence to worldwide natural environments. Also, it is recently reported that microparticles included in the exhaust gas (diesel particulates) cause allergic disorder and the reduction of sperm count, so that it is considered that it is a significant subject matter in mortality to take a countermeasure for removing the microparticles.

Under the above situation, various exhaust gas purifying apparatuses have hitherto been proposed. In general, the exhaust gas purifying apparatus has a structure that a casing is arranged in the course of an exhaust pipe connected to an exhaust manifold of an engine and a filter for the purification of the exhaust gas having fine pores is arranged in the casing. In the filter for the purification of the exhaust gas is used a metal or an alloy or a ceramic as a forming material. For example, as a typical example of the filter for the purification of the exhaust gas made of a ceramic, there is noticed a porous silicon carbide having high heat resistance and mechanical strength and being chemically stable.

Another reason noticing the porous silicon carbide is based on the fact that the filter for the purification of the exhaust gas is demanded to have a higher thermal responsibility because particulates (soot) are removed by burning with a catalyst or the like as the catching of soot proceeds to a certain extent. However, the filter for the purification of the exhaust gas made of a material having a large thermal conductivity has a problem that even if the temperature of the exhaust gas is made high, the flow amount is large in dependence to the operating region and hence heat is diffused and the whole of the filter is hardly warmed and heat enough to activate the catalyst can not be uniformly given to the whole of the filter.

Now, the inventors have previously proposed a filter for the purification of the exhaust gas in which a bonding neck portion of ceramic crystal particles constituting the porous structure is adjusted to improve the thermal conductivity (see JP-A-2001-97777).

In such a filter for the purification of the exhaust gas, however, a catalyst of a platinum series element or the other metal element or an oxide thereof or the like and a catalyst coat layer are carried on surfaces of cell walls and hence opened pores on the surfaces of the cell wall are at a closed state, which increases the pressure loss of the filter.

In order to solve the above problem, the inventors have proposed a filter for the purification of the exhaust gas in which the catalyst or the catalyst coat layer is uniformly carried on the surface of the individual ceramic particle forming the cell wall of the porous ceramic carrier, whereby the pressure loss can be reduced (see JP-A-2001-314764).

In case of the latter filter for the purification of the exhaust gas, however, it is required to make large the thickness of the catalyst or the catalyst coat layer for promoting combustion by the carrying of the catalyst. On the other hand, when the thickness of the catalyst or the catalyst coat layer is made large, the pore size or the porosity in the cell wall of the filter for the purification of the exhaust gas is substantially decreased and hence the pressure loss of the filter for the purification of the exhaust gas is made inversely large.

On the contrary, there is proposed a filter for the purification of the exhaust gas provided with the catalyst in which the pore size or porosity of the porous ceramic carrier is previously set to a higher level, whereby the pressure loss can be controlled to a low level even if the thickness of the catalyst or the catalyst coat layer is increased.

In the filter for the purification of the exhaust gas provided with the catalyst, however, the density of the ceramic decreases, so that the ratio of necks bonding the ceramic particles decreases and hence heat enough to activate the catalyst can not be uniformly given to the whole of the filter.

Also, a low density ceramic having a large specific surface area is used in the catalyst coat layer for carrying the catalyst, so that the thermal conduction is lower than that of the ceramic constituting the catalyst carrier. Therefore, as the ratio of the catalyst coat layer increases, there is caused a problem that heat enough to activate the catalyst can not be given to the whole of the carrier.

It is, therefore, a main object of the invention to provide a filter for the purification of an exhaust gas not having the above-mentioned problems inherent to the conventional filter for the purification of the exhaust gas provided with the catalyst.

It is another object of the invention to provide a filter for the purification of an exhaust gas which can maintain a high porosity of a ceramic carrier without caring the particle size or neck number of the ceramic constituting the catalyst carrier and indicates a high thermal conduction after the carrying of the catalyst coat layer or the catalyst.

It is the other object of the invention to propose a desirable structure of a filter for the purification of an exhaust gas indicating a high thermal conductivity irrespective of the high porosity.

It is a further object of the invention to propose a filter for the purification of an exhaust gas indicating a property that the whole of the filter is easily warmed but is hardly cooled by improving a radiant heat dispersion performance of the catalyst coat layer against heat ray of infrared or far-infrared region or improving a heat insulating property.

### DISCLOSURE OF THE INVENTION

The inventors have made further studies in order to achieve the above objects and found that when the thermal conduction of the catalyst coat layer is improved by including a great amount of a high heat-conducting substance having a high thermal conductivity such as metal, ceramic or the like into the catalyst coat layer, the porosity of the carrier can be made large without obstructing the thermal conduction as a whole of the filter and as a result, the invention has been accomplished.

That is, the invention lies in a filter for the purification of an exhaust gas provided with a catalyst coat layer formed by carrying a catalyst active component on a surface of a porous ceramic carrier, characterized in that the porous ceramic carrier has a porosity of 40-80% and a thermal conductivity as a filter is 0.3-60 W/mk.

In a first embodiment of the filter for the purification of the exhaust gas according to the invention, it is preferable that the thermal conductivity of the filter is 3-60 W/mk, and that the catalyst coat layer is made of at least one oxide ceramic selected from alumina, titania, zirconia and silica, and that at least one metal having a thermal conductivity higher than the oxide ceramic selected from copper, gold, silver and aluminum or an alloy thereof, or at least one ceramic selected from aluminum nitride, silicon carbide and silicon nitride is included therein.

Further, the catalyst coat layer is preferable to be carried with at least one catalyst active component selected from a noble metal, an alkali metal, an alkaline earth metal and a rare earth oxide.

The porous ceramic carrier is preferable to be constituted with at least one ceramic selected from silicon carbide, silicon nitride, cordierite, mullite, sialon, silica, aluminum titanate, lithium aluminum silicate (LAS) and zirconium phosphate.

In a second embodiment of the filter for the purification of the exhaust gas according to the invention, a catalyst coat layer containing a substance having such a high refractive index that heat ray infrared or far-infrared region is effectively dispersed or a colored substance itself is formed on a ceramic carrier having a high porosity, whereby the radiant heat dispersion ability or the heat insulating property of the catalyst coat layer can be improved while maintaining the thermal conduction of the filter as a whole at a low level and hence the whole of the filter is easily warmed but hardly cooled.

That is, the second embodiment of the invention lies in a filter for the purification of an exhaust gas in which a catalyst coat layer is made of at least one oxide ceramic selected from alumina, titania, zirconia and silica and contains a substance having a refractive index larger than that of the oxide ceramic and a thermal conductivity of the filter is 0.3-3 W/mk.

In the second embodiment of the invention, it is desirable to contain at least one substance having a refractive index of not less than 1.4 and selected from TiO₂, BaTiO₃, PbS, Fe₂O₃, CoCO₃ and MnO₂. Particularly, it is preferable to contain inorganic powder having a peak in a portion that a reflectance against an electromagnetic wave of not less than 10 µm, or a heat ray of an infrared and far-infrared region is not less than 70%.

Also, in the second embodiment of the invention, it is preferable that the catalyst coat layer contains a pigment colored itself and the thermal conductivity is 0.3-3 W/mk as the filter for the purification of the exhaust gas. The pigment is preferable to be compounded so that a brightness of the catalyst coat layer as a whole is not more than 8. As the pigment, it is preferable to use at least one inorganic metal selected from iron oxide, copper oxide and a cobalt compound such as CoO·nAl₂O₃, Co₃(PO₄)₂ and the like.

In the second embodiment of the invention, it is preferable that at least one catalyst selected from a noble metal, an alkali metal, an alkaline earth metal and rare earth oxide is carried on the catalyst coat layer constituted with at least one oxide ceramic selected from alumina, titania, zirconia and silica.

### BRIEF DESCRIPTION OF THE DRAWINGS

FIG. 1 is a schematic view illustrating a general filter for the purification of an exhaust gas.
FIG. 2 is a graph showing a relation between porosity and thermal conductivity in a filter for the purification of an exhaust gas according to the invention.
FIG. 3 is a schematic view illustrating an aggregate of filters for the purification of an exhaust gas.
FIG. 4 is a diagrammatic view when the aggregate of filters for the purification of an exhaust gas shown in FIG. 3 is mounted onto an engine.
FIG. 5 is a graph showing a relation between porosity and thermal conductivity of the filter for the purification of an exhaust gas in correspondence with a content of a high refractive index substance in a catalyst coat layer.
FIG. 6 is a graph showing a relation between porosity and thermal conductivity of the filter for the purification of an exhaust gas in correspondence with a content of a pigment in a catalyst coat layer.

### BEST MODE FOR CARRYING OUT THE INVENTION

A first embodiment of the filter for the purification of an exhaust gas according to the invention comprises a porous ceramic carrier and a catalyst coat layer formed by carrying a catalyst active component on a surface of the carrier, particularly surfaces of ceramic particles forming a cell wall thereof, in which a high thermal conduction substance is included in the catalyst coat layer to maintain a high thermal conduction as a filter and keep a porosity of the porous ceramic carrier at a high level to thereby prevent the lowering of pressure loss. That is, it is proposed that the porosity of the porous ceramic carried is 40-80% and the thermal conductivity as the filter is maintained at 3-60 W/mk.

Also, a second embodiment of the filter for the purification of an exhaust gas according to the invention proposes that the catalyst coat layer is constituted with an oxide ceramic and a substance having a refractive index larger than that of the oxide ceramic or a pigment colored itself is included in the oxide ceramic, whereby the filter as a whole is easily warmed but hardly cooled while maintaining the thermal conductivity as the filter to a low level (0.3-3 W/km).

In the filter for the purification of the exhaust gas according to the invention, as a porous ceramic used in the carrier can be used at least one ceramic selected from silicon carbide, silicon nitride, cordierite, mullite, sialon, silica, aluminum titanate, lithium aluminum silicate (LAS) and zirconium phosphate.

As the ceramic adaptable for the first embodiment, however, since the thermal conductivity is necessary to be relatively high, it is preferable to use a silicon carbide ceramic (hereinafter referred to as SiC). Also, in order to improve the resistance to thermal shock, a silicon metal may be added to SiC in an amount of 5-50 wt% of a whole.

As the ceramic adaptable for the second embodiment, since it is necessary to be relatively low in the thermal conductivity and low in the thermal expansion ratio, it is preferable to use cordierite.

The catalyst coat layer is not particularly limited, but it is desirable to be at least one oxide ceramic selected from alumina, titania, zirconia and silica. Among the oxide ceramics, alumina having a large specific surface area is particularly preferable. Because, when the substance for covering the surfaces of ceramic particles constituting the cell walls of the carrier is excellent in the thermal bonding to the high thermal conducting substance and has a large specific surface area, the carrying amount can be increased and the durability can be improved.

Furthermore, the catalyst coat layer is formed by applying a slurry containing finely pulverized oxide to the surface of the cell wall through a sol-gel method or the like. Because, the surface of each of the ceramic particles constituting the cell wall can be covered independently.

The catalyst coat layer adaptable in the first embodiment is desirable to contain a substance having a thermal conductivity relatively higher than that of the oxide ceramic (hereinafter referred to as a high thermal conducting substance simply) therein.

For example, as the high thermal conducting substance, it is desirable to use a substance having a thermal conductivity higher than that of the oxide ceramic constituting the matrix of the catalyst coat layer such as alumina or the like, i.e., at least one metal selected from copper, gold, silver and aluminum or an alloy thereof, or at least one ceramic selected from aluminum nitride, silicon carbide and silicon nitride.

Also, there can be used ceramics obtained by densifying the same substance as the porous ceramic to make the thermal conductivity relatively high, for example, silicon carbide, cordierite, mullite and the like, or metals having a thermal conductivity higher than that of the porous ceramic such as iron, chromium, nickel, aluminum and the like or an alloy thereof.

On the other hand, as the catalyst coat layer adaptable for the second embodiment, it is desirable to contain a substance having a refractive index relatively higher than that of the oxide ceramic (hereinafter referred to as a high refractive index substance simply), whereby an electromagnetic wave of not less than 10 µm (radiant heat of an infrared or far-infrared region through a high temperature exhaust gas simply) can be scattered effectively. Because, the scattering is apt to be easily caused at a contact face between the high refractive index substance and a low refractive index substance.

For example, as the high refractive index substance, inorganic substances in the form of powder or fiber are preferable, and particularly at least one substance having a refractive index of not less than 1.4 selected from TiO₂, BaTiO₃, PbS, Fe₂O₃, CoCO₃ and MnO₂ is preferable, and further inorganic powder having a peak in a portion that a reflection ratio to an electromagnetic wave having a wavelength of not less than 10 µm is not less than 70% is preferable. Because, as the refractive index becomes high, the ability of scattering radiant is improved, while as the wavelength becomes longer as compared with a short wavelength, it hardly passes through the substance and the reaction between soot stored on the surface and the catalyst can be improved.

Also, the catalyst coat layer is desirable to be compounded with a pigment colored itself so as to render the brightness of the catalyst coat layer as a whole into not more than 8 instead of the high refractive index substance. Because, when the brightness is not more than 8, the effect of insulating heat to radiant heat of infrared and far-infrared regions through the high-temperature exhaust gas can be more improved.

Moreover, the brightness is evaluated according to JIS Z8721. The surface color of the objective is represented by hue, brightness and chroma as three attributes of color perception, and the brightness is a measure judging a magnitude of reflection ratio on the surface of the objective. The brightness is represented by symbols N0-N10 when a non-chromatism is a standard and an ideal black brightness is 0 and an ideal white brightness is 10 and the attribute of color brightness is divided into 10 equal stages between the ideal black 0 and the ideal white 10. When the brightness is measured, the brightness is determined by comparing each standard color label corresponding to N0-N10 with the surface color of the product. In this case, the brightness is determined up to the first decimal place in which the value of the first decimal place is 0 or 5. The feature that the brightness is low indicates that the color is near to black, and the feature that the brightness is high indicates that the color is near to white.

As the pigment is preferable at least one inorganic metal oxide selected from iron oxide, copper oxide and cobalt compounds such as CoO·nAl₂O₃, Co₃(PO₄)₂ and the like.

The catalyst carried on the catalyst coat layer is not particularly limited, but rare earth oxides (ceria, lanthana and the like), alkali metals (Li, Na, K, Cs and the like) and alkaline earth metals (Ca, Ba, Sr and the like) can be used in addition to the usually used noble metals (binary and ternary alloys such as Pt/Rh, Pt/Rh/Pd and the like).

The filter for the purification of the exhaust gas according to the invention is desirable to be formed by forming cell walls of a carrier with a porous ceramic sintered body, applying a catalyst coat layer containing a high thermal conductive substance to each surface of the cell walls, particularly each surface of the ceramic particles at a given thickness and then carrying a catalyst active component (hereinafter referred to as an active component simply) on the catalyst coat layer.

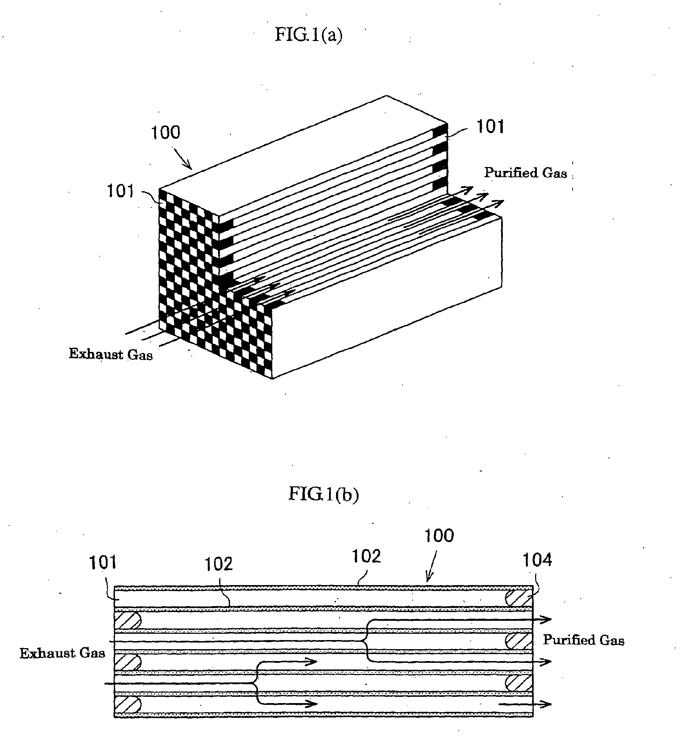

The porous ceramic carrier is used , for example, by compounding and mixing a starting ceramic powder with an organic binder, a lubricant, a plasticizer and water (hole forming material of metallic powder, if necessary), extrusion-shaping, sealing one end portions of a given through-holes, sealing the other end portions of the remaining through-holes, drying at 150-200°C, degreasing at 300-500°C and sintering at 1000-2300°C for 1-10 hours, and particularly used as a wall flow type honeycomb filter shown in FIG. 1.

The carrier (filter) 100 is constituted with a ceramic sintered body of approximately a square form at section in which plural through-holes 101 (cells) are regularly formed along their axial line direction.

The cells 101 are separated away with each other by cell walls 102, and an opening portion of each cell is sealed with a plug 104 at one end face side and the other end face of this cell 101 is opened. It is preferable that the cells are arranged so as to render the opened portions and the sealed portions at each end face into a checkered pattern as a whole.

Moreover, the density of the cells 101 is preferable to be 200-350 cells/square inch. That is, about a half of the cells 101 are opened at an upstream-side end faces and the remaining cells are opened at downstream-side end faces, and the thickness of the cell wall 102 separating cells 101 is set to 0.1-0.4 mm.

The reason why the cell density is limited to a range of 200-350 cells/square inch is due to the fact that when it is less than 200 cells/square inch, the filtering area of the filter is small and the cell wall 102 becomes too thick against the soot catching amount, while when it exceeds 350 cells/square inch, the production is difficult.

Thus, the carrier 100 of the ceramic sintered body has a structure partitioned by the porous cell walls 102. The pore size of the porous cell wall 102 is measured by a mercury pressure method, a scanning type electron microscope (SEM) or the like. The average value of the pore size is a range of 5 µm-40 µm. In case of measuring by the mercury pressure method, it is preferable that a standard deviation value in a pore size distribution represented by a common logarithm of the pore size is not more than 0.40.

When the average value of the pore size of the porous cell wall 102 is within the above range, it becomes preferable to catch fine particulates after the formation of the catalyst coat layer. That is, the diesel particulates can be surely caught by setting the average pore size of the cell wall 102 to the above range. When the average value of the pore size of the cell wall 102 is less than 5 µm, the pressure loss when the exhaust gas passes through the inner wall becomes extremely large and there is caused a fear of stopping the engine, while when the average value of the pore size exceeds 40 µm, fine particulates can not be caught efficiently.

In the invention, it is most important that the porosity of the cell wall 102 is 40-80%, preferably 40-70%, further preferably 40-60% as measured by a mercury pressure method, an Archimedes method or the like. When the porosity of the porous ceramic carrier is less than 40%, the carrier is too densified and the catalyst coat layer hardly aggregates in necks of the particles constituting the carrier and hence the effect by including the high thermal conductive substance in the catalyst coat layer is not developed. While, when the porosity exceeds 80%, the thermal conduction as the filter is too low, and even if a greater amount of the high thermal conductive substance or a greater amount of the high refractive index substance or pigment is included in the catalyst coat layer, the thermal conduction of the filter as a whole becomes low or a radiant heat can not be insulated and hence the heat insulating effect of the filter as a whole becomes small.

In the filter of the invention, particularly the first embodiment, the high thermal conductivity as the filter is kept even at the aforementioned high porosity. That is, the thermal conductivity of the cell (filter) is important to be 3-60 W/mk, preferably 3-50 W/mk, further preferably 10-50 W/mk as measured by a laser flash method according to JIS R1611. When the thermal conductivity of the filter is less than 3 W/mk, the heat responsibility of the whole of the filter mounted onto the engine becomes poor and burnt embers of the soot is caused and there is a possibility that the breakage of the filter is brought from these portions. While, when the thermal conductivity of the filter exceeds 60 W/mk, the diffusion of heat is too fast and even if a high-temperature exhaust gas is introduced, the filter is hardly warmed.

In the second embodiment of the filter according to the invention, the thermal conductivity of the cell (filter) is important to be 0.3-3 W/mk, preferably 0.5-3 W/mk, further preferably 0.7-2 W/mk as measured by a laser flash method according to JIS R1611. When the thermal conductivity of the filter is less than 0.3 W/mk, the heat responsibility of the whole of the filter mounted onto the engine becomes poor and burnt embers of the soot is caused and there is a possibility that the breakage of the filter is brought from these portions. While, when the thermal conductivity of the filter exceeds 3 W/mk, the diffusion of heat is too fast and even if a high-temperature exhaust gas is introduced, the filter is hardly warmed.

The production of the filter for the purification of the exhaust gas according to the invention will be described below.
① As the first embodiment of the invention, there is a method of producing a filter for the purification of an exhaust gas in which a silicon carbide (SiC) ceramic is used as a porous ceramic carrier, and an alumina film is used as a catalyst coat layer on the SiC ceramic carrier, and copper is used as a high thermal conductive substance included in the alumina film, and platinum is used as a catalyst, and cerium is used as a co-catalyst, and potassium is used as a NOx occluding catalyst.
② As the second embodiment of the invention, there is a method of producing a filter for the purification of an exhaust gas in which cordierite is used as a porous ceramic carrier, and an alumina film formed on the ceramic carrier is used as a catalyst coat layer, and titania is used as a high refractive index substance included in the alumina film, or iron oxide is used as a pigment included in the alumina film instead of titania, and platinum is used as a catalyst, and cerium is used as a co-catalyst and potassium is used as a NOx occluding catalyst.

### (1) Application of catalyst coat layer onto porous ceramic carrier

### (a) Solution impregnating step

### ① In case of the first embodiment

This step is a treatment that a solution containing aluminum, high thermal conductive substance and rare earth element, for example, an aqueous mixed solution of aluminum nitrate-copper nitrate-cerium nitrate is applied onto and impregnated into each surface of SiC ceramic particles constituting cell walls of a porous ceramic carrier through a sol-gel method to form an aluminum catalyst coat layer containing the high thermal conductive substance and rare earth oxide on the surface of the carrier.

### ② In case of the second embodiment

This step is a treatment that a solution containing aluminum, high refractive index substance or pigment, rare earth element, for example, an aqueous mixed solution of Al(NO₃)₃-Ti(NO₃)₄-Ce(NO₃)₃ or an aqueous mixed solution of Al(NO₃)₃-Fe(NO₃)₃-Ce(NO₃)₃ or the like is applied onto and impregnated into each surface of cordierite particles constituting cell walls of a porous ceramic carrier through a sol-gel method to form an alumina coat layer containing the high refractive index substance or pigment and rare earth oxide on the surface of the carrier.

As to the aqueous mixed solution used in the treatments ①, ② of the above embodiments, as a metal compound of a starting material in an example of the aluminum-containing compound solution, there are inorganic metal compounds and organic metal compounds. As the inorganic metal compound are used Al(NO₃)₃, AlCl₃, AlOCl, AlPO₄, Al₂(SO₄)₃, Al₂O₃, Al(OH)₃, Al and the like. Among them, Al(NO₃)₃ and AlCl₃ are preferable because they are easily soluble in a solvent such as alcohol, water or the like and easy in the handling. As the organic metal compound are mentioned metal alkoxides, metal acetylacetonates and metal carboxylates. As a concrete example, there are Al(OCH₃)₃, Al(OC₂H₃)₃, Al(iso-OC₃H₇)₃ and the like.

Among the aqueous mixed solutions, Cu(NO₃)₂, CuCl₂, CuSO₄ and the like are used as a solution of copper-containing compound, and Ce(NO₃)₃, CeCl₃, Ce₂(SO₄)₃, CeO₂, Ce(OH)₃, Ce₂(CO₃)₃ and the like are used as a solution of cerium-containing compound.

Among the aqueous mixed solution, Ti(NO₃)₄, TiCl₄, Ti(SO₄)₂ and the like are used as a solution of titanium-containing compound.

As a solution of iron oxide-containing compound as the pigment in the aqueous mixed solution are used Fe(NO₃)₂, Fe(NO₃)₃, FeCl₂, FeCl₃, FeSO₄, Fe₃(SO₄)₂, Fe₂(SO₄)₃ and the like. As a solution of cerium-containing compound are used Ce(NO₃)₃, CeCl₃, Ce₂(SO₄)₃, CeO₂, Ce(OH)₃, Ce₂(CO₃)₃ and the like.

As a solvent of the mixed solution, at least one or more of water, alcohol, diol, polyvalent alcohol, ethylene glycol, ethylene oxide, triethanolamine, xylene and the like are used by mixing in consideration of the solubility to the above metal compound.

As a catalyst in the formation of the solution, hydrochloric acid, sulfuric acid, nitric acid, acetic acid and hydrofluoric acid may be added.

In the invention, Al(NO₃)₃, Cu(NO)₃, Ce(NO₃)₃, Ti(NO₃)₄, Fe(NO₃)₃ may be mentioned as an example of the above metal compound. Because, they are dissolved in the solvent at a relatively low temperature and are easy in the formation of the starting solution. Also, 1,3-butane diol is preferable as the solvent. A first reason is based on the fact that the viscosity is proper and a gel film having a suitable thickness may be formed on SiC particles at a gel state. A second reason is based on the fact that the solvent forms a metal alkoxide in the solution and a metal oxide polymer consisting of oxygen-metal-oxygen, i.e. a precursor of a metal oxide gel is easily formed.

An amount of Al(NO₃)₃ as the above metal compound is desirable to be 10-50 mass%. When the amount is less than 10 mass%, the alumina amount having a surface area for maintaining the activity of the catalyst over a long time can not be carried, while when it exceeds 50 mass%, an amount of heat generation becomes large in the dissolution and the gelation is apt to be easily caused.

A compounding ratio of Al(NO₃)₃ to Ce(NO₃)₃ as the metal compound is preferable to be 10:2. As the amount of Al(NO₃)₃ is made rich, the dispersibility of CeO₂ particles after the firing can be improved.

Also, a compounding ratio of Al(NO₃)₃ to Cu(NO₃)₂ as the metal compound is desirable to be adjusted by the carrying amount of CuO. A compounding ratio of Al(NO₃)₃ to Ti(NO₃)₄ or a compounding ratio of Al(NO₃)₃ to Fe(NO₃)₃ is desirable to be adjusted by the carrying amount of TiO₂ or Fe₂O₃. In the preparation of the impregnating solution of these metal compounds, a temperature is desirable to be 50-130°C. When the temperature is lower than 50°C, the solubility of the solute is low, while when it exceeds 130°C, the reaction violently proceeds to cause gelation and hence the solution can not be used as a coating solution. Also, the stirring time of the impregnating solution is desirable to be 1-9 hours. When the time is within the above range, the viscosity of the solution is stable.

It is preferable that the thus adjusted solution of the metal compound is penetrated into all pores as a space between ceramic particles in each cell wall. For this end, it is preferable to adopt a method wherein the catalyst carrier (filter) is placed in a vessel and filled with the metal compound solution and then deaerated, a method wherein the solution is flown into one side of the filer and the deaeration is conducted at the other side, and the like.

In this case, an aspirator, a vacuum pump or the like may be used as a deaerating device. By using such a device can be discharged air in the pores of the cell wall and hence the solution of the metal compound can be evenly applied to the surface of each ceramic particle. Moreover, when the ceramic is used as a high thermal conductive substance, this ceramic may be pulverized to a particle size of about few µm and then the pulverized ceramic particles are mixed with the alumina-silica solution with stirring to form uniform film as a slurry. On the other hand, even if the ceramic is used as a high refractive index substance or a pigment instead of an ionizable metal, this ceramic may be pulverized to a particle size of about few µm and then the pulverized ceramic particles are mixed with the alumina-silica solution with stirring to form uniform film as a slurry.

### (b) Drying step

This step is a treatment that volatile components such as NO₂ and the like are removed by evaporation and the solution is gelated to fix to the surface of the ceramic particle and at the same time an extra solution is removed, which is carried out by heating at a temperature of 120-170°C for about 2 hours. When the heating temperature is lower than 120°C, the volatile component is hardly evaporated, while when it exceeds 170°C, the thickness of the gelated film becomes non-uniform.

### (c) Firing step

This step is a pre-firing treatment for removing the residual component to form an amorphous alumina thin film, which is desirable to be carried out by heating at a temperature of 300-1000°C for 5-20 hours. When the pre-firing temperature is lower than 300°C, it is difficult to remove the residual organic substance, while when it exceeds 1000°C, Al₂O₃ is not amorphous but is crystallized, which tends to lower the surface area.

### (2) Carrying of catalyst active component

### (a) Solution preparing step

① On the surface of SiC ceramic carrier is formed an alumina coat layer containing the high thermal conductive substance and the rare earth oxide, and platinum as a catalyst active component and potassium as a NOx occluding catalyst are carried on the surface of the alumina coat layer. As the active component, a noble metal such as palladium, rhodium or the like other than platinum may be included.
② On the surface of the ceramic carrier is formed an alumina coat layer containing the high refractive index substance and the rare earth oxide, and platinum as a catalyst active component and potassium as a NOx occluding catalyst are carried on the surface of the alumina coat layer. As the active component, a noble metal such as palladium, rhodium or the like other than platinum may be included.

These noble metals have an action that NO₂ is produced by reacting NO in the exhaust gas with O₂ prior to the occlusion of NOx with the alkali metal or alkaline earth metal and once the occluded NOx is discharged, this NOx is reacted with combustible component in the exhaust gas to conduct detoxification.

Also, the kind of the alkali metal and/or alkaline earth metal included in the catalyst layer as a NOx occluding component is not particularly limited. For example, lithium, sodium, potassium, cesium are mentioned as the alkali metal, and calcium, barium, strontium and the like are mentioned as the alkaline earth metal. When an alkali metal having a high reactivity with silicon, particularly potassium is used as a NOx occluding component among them, the invention is most effective.

In this case, the carrying amount of the catalyst active component is determined by adding an aqueous solution containing platinum, potassium and the like to the carrier by a water absorbing amount thereof at a state of slightly wetting the surface. The water absorbing amount held by the SiC ceramic carrier means that when the measured value of the water absorbing amount in the dried carrier is 22.46 mass%, if the carrier has a mass of 110 g and a volume of 0.163 1, this carrier absorbs water of 24.7 g/l.

As a starting substance of platinum is used, for example, a solution of dinitordianmine platinum nitrate ([Pt(NE₃)₂(NO₂)₂]HNO₃, Pt concentration: 4.53 mass%), and as a starting substance of potassium is used, for example, an aqueous solution of potassium nitrate (KNO₃), which are mixed in use.

For instance, platinum of 1.7 (g/l) x 0.163 (l) = 0.272 g is carried on the carrier for carrying a given amount, 1.7 g/l of platinum, and potassium of 0.2 (mol/l) x 0.163 (l) = 0.0326 mol is carried on the carrier for carrying potassium of 0.2 mol/l, so that the solution of dinitrodianmine platinum nitrate (Pt concentration: 4.53%) is diluted with KNO₃ and distilled water.

That is, a weight ratio X (%) of dinitrodianmine platinum nitrate solution (Pt concentration: 4.53 mass%)/(KNO₃ and distilled water) is 24.8 mass% as calculated by X = 0.272 (Pt amount, g)/24.7 (water content, g)/4.53 (Pt concentration, mass%). In this case, the nitrate solution (KNO₃ concentration: 99%) is diluted with the distilled water so that KNO₃ is 0.0326 mol.

### (b) Solution impregnating step

A given amount of the above adjusted aqueous solution of dinitrodianmine platinum nitrate is added dropwise to both end faces of the carrier at constant intervals through a pipette. For example, it is added dropwise every 40-80 droplets on the one-side face at constant intervals, whereby platinum is dispersed into and fixed onto the surface of the alumina carrying film covering SiC ceramic carrier.

### (c) Drying and firing step

The carrier after the addition of the aqueous solution is dried under conditions of 110°C-about 2 hours to remove water and then left to stand in a desiccator for about 1 hour, and thereafter an adhesion amount is measured by an electron scale or the like. Then, it is fired in N2 atmosphere under conditions of about 500°C-1 hour to metallize platinum and potassium.

### EXAMPLES

The invention will be described with respect to the examples as compared with comparative examples.

### (Example 1) High thermal conductive substance-containing example

In this example is measured a thermal conductivity of a filter for the purification of an exhaust gas formed by coating a surface of a porous ceramic carrier (SiC) having a different porosity with an alumina coat layer containing Cu as a high thermal conductive substance through a laser-flash method.

At first, a starting material of the porous ceramic carrier is formed by compounding 70 parts by weight of SiC powder having an average particle size of about 10 µm with about 30 parts by weight of SiC powder having an average particle size of about 0.5 µm or a metallic Si and further compounding about 0-23 parts by weight of an acrylic resin having an average particle size of about 10 µm as a pore forming material, 6-40 parts by weight of methylcellulose as a shaping assistant, and 16-36 parts by weight of a dispersion medium consisting of an organic solvent and water based on 100 parts by weight of ceramic powder as shown in Table 1.

**(Table 1)**

| | SiC compounding | | SiC compounding | | Pore forming material compounding | | Shaping assistant | Dispersion medium | Fining temperature | Fining time | Porosity |
|---|---|---|---|---|---|---|---|---|---|---|---|
| A1 | 10µm | 70% | 0.5µm | 30% | 10µm | 3% | 10% | 18% | 2200°C | 6hr | 40% |
| A2 | 10µm | 70% | 0.5µm | 30% | 10µm | 16% | 17% | 25% | 2200°C | 6hr | 60% |
| A3 | 10µm | 70% | 0.5µm | 30% | 10µm | 20% | 25% | 33% | 2200°C | 6hr | 80% |
| B1 | 10µm | 70% | 0.5µm | 30% | 10µm | 0% | 6% | 16% | 2200°C | 6hr | 35% |
| B2 | 10µm | 70% | 0.5µm | 30% | 10µm | 23% | 40% | 36% | 2200°C | 6hr | 85% |

| | SiC compounding | | Metal Si | | Pore forming material compounding | | Shaping assistant | Dispersion medium | Fining temperature | Fining time | Porosity |
|---|---|---|---|---|---|---|---|---|---|---|---|
| A4 | 10µm | 70% | 0.5µm | 30% | 10µm | 3% | 10% | 18% | 1500°C | 3hr | 40% |
| A5 | 10µm | 70% | 0.5µm | 30% | 10µm | 16% | 17% | 25% | 1500°C | 3hr | 60% |
| A6 | 10µm | 70% | 0.5µm | 30% | 10µm | 20% | 25% | 33% | 1500°C | 3hr | 80% |
| B3 | 10µm | 70% | 0.5µm | 30% | 10µm | 0% | 6% | 16% | 1500°C | 3hr | 35% |
| B4 | 10µm | 70% | 0.5µm | 30% | 10µm | 23% | 40% | 36% | 1500°C | 3hr | 85% |

The starting material is kneaded and shaped into a honeycomb form through an extrusion shaping and a part of the resulting cell 101 is sealed in a checkered pattern.

Then, the shaped body is dried and degreased at 450°C for 3 hours and fired in an argon atmosphere at 2200°C for 6 hours or at 1500°C for 3 hours to produce a porous ceramic carrier having a cell wall of 0.3 mm, a cell density of 200 cells/square inch and a porosity of 35-85%.

Moreover, ceramic carriers having porosities of 40%, 60% and 80% are A1, A2 and A3, respectively, and ceramic carriers having porosities of 35% and 85% are B1 and B2, respectively, and metallic Si is A4, A5, A6, B3 and B4, respectively.

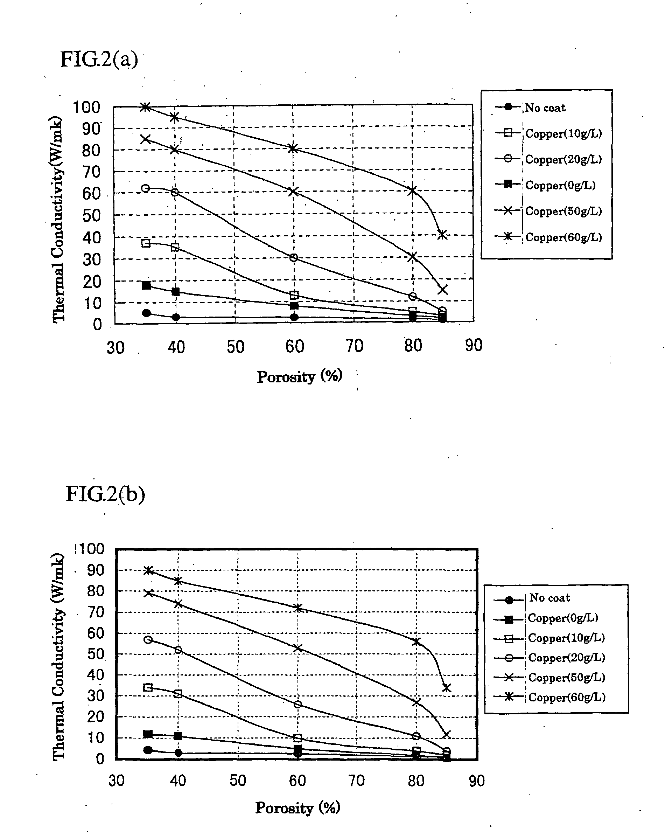

The results of thermal conductivities of the porous ceramic carriers A1, A2, A3, B1 and B2 as calculated through the laser flash method according to JIS R1611 are shown by symbol ● in FIGS. 2 (a) and (b).

As seen from the test results, as the porosity of the porous ceramic carrier becomes higher, the thermal conductivity becomes apparently little lower.

Then, there are prepared aqueous mixed solutions C1-C5 of aluminum nitrate-copper nitrate-cerium nitrate having various concentrations as shown in Table 2, which are impregnated into the porous ceramic carriers A1, A2, A3, B1 and B2 through a sol-gel method to form an alumina coat layer containing copper as a high thermal conductive substance and ceria as a rare earth oxide on the surface of the ceramic carrier, and thereafter 1.7 g/l of platinum as an active component and 0.2 mol/l of potassium as a NOx occluding catalyst are carried on the surface of the alumina coat layer to prepare a filter for the purification of an exhaust gas, and a thermal conductivity thereof is measured by the laser flash method.

**(Table 2)**

| Mixed Solution | Al(NO₃)₃ | Cu(NO₃)₃ | Ce(NO₃)₂ | Alumina amount | Copper amount | Ceria amount | Platinum amount | Potassium amount |
|---|---|---|---|---|---|---|---|---|
| C1 | 40 mass% | 40 mass% | 8 mass% | 10g/L | 10g/L | 2g/L | 1.7g/L | 0.2mol/L |
| C2 | 40 mass% | 80 mass% | 8 mass% | 10g/L | 20g/L | 2g/L | 1.7g/L | 0.2mol/L |
| C3 | 40 mass% | 0 mass% | 8 mass% | 10g/L | 0g/L | 2g/L | 1.7g/L | 0.2mol/L |
| C4 | 40 mass% | 200 mass% | 8 mass% | 10g/L | 50g/L | 2g/L | 1.7g/L | 0.2mol/L |
| C5 | 40 mass% | 240 mass% | 8 mass% | 10g/L | 60g/L | 2g/L | 1.7g/L | 0.2mol/L |

Moreover, the thermal conductivities of the filters having copper contents of 10 g/l, 20 g/l, 0 g/l, 50 g/l and 60 g/l (using the aqueous mixed solutions C1, C2, C3, C4 and C5) are shown by symbols □, ○, ■, × and 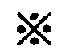 in FIG. 2.

The results measured on the thermal conductivity of the filter for the purification of an exhaust gas by the laser flash method are shown in Table 3 and FIG. 2.

As seen from the measured results, even in the filters using the porous ceramic carriers A1, A2, A3 having porosities of 40%, 60% and 80%, the thermal conduction of the filter can be improved by increasing the copper content as the high thermal conductive substance in the alumina coat layer formed on the filter.

**(Table 3)**

| Carrier (porosity%) | Thermal conductivity (W/m · k) | | | | | |
|---|---|---|---|---|---|---|
| | No coat | Copper (10g/L) | Copper (20g/L) | Copper (0g/L) | Copper (50g/L) | Copper (60g/L) |
| B1 (35) | 5 | 37 | 62 | 18 | 85 | 100 |
| A1 (40) | 3 | 35 | 60 | 15 | 80 | 95 |
| A2 (60) | 2.5 | 13 | 30 | 8 | 60 | 80 |
| A3 (80) | 1.5 | 5 | 12 | 3 | 30 | 60 |
| B2 (85) | 1 | 3 | 5 | 2 | 15 | 40 |

### (Example 2) Example having a high thermal conductivity

In order to confirm the function and effect of the filter provided with the high thermal conduction, in this example, the filter aggregate is mounted onto an exhaust pipe of an actual diesel engine and then a temperature difference (maximum temperature difference) between a central portion and a peripheral portion thereof and a maximum temperature of the central portion are measured.

At first, an alumina coat layer having a copper content of 50 g/l, 20 g/l or 10 g/l is formed on the ceramic carrier A2 having a porosity of 60% by using the aqueous mixed solution C4, C2 or C1, and 1.7 g/l of platinum as an active component and 0.2 mol/l of potassium as a NOx occluding catalyst are carried on the surface thereof to prepare a filter (Examples 2-1, 2-2, 2-3), while there are prepared a filter in which an alumina coat layer is not formed on the ceramic carrier A2 having a porosity of 60% (Comparative Example 2-1) and a filter in which an alumina coat layer having a copper content of 60 g/l is formed on the ceramic carrier A2 having a porosity of 60% by using the aqueous mixed solution C5 and platinum as an active component and potassium as a NOx occluding catalyst are carried on the surface thereof (Comparative Example 2-2).

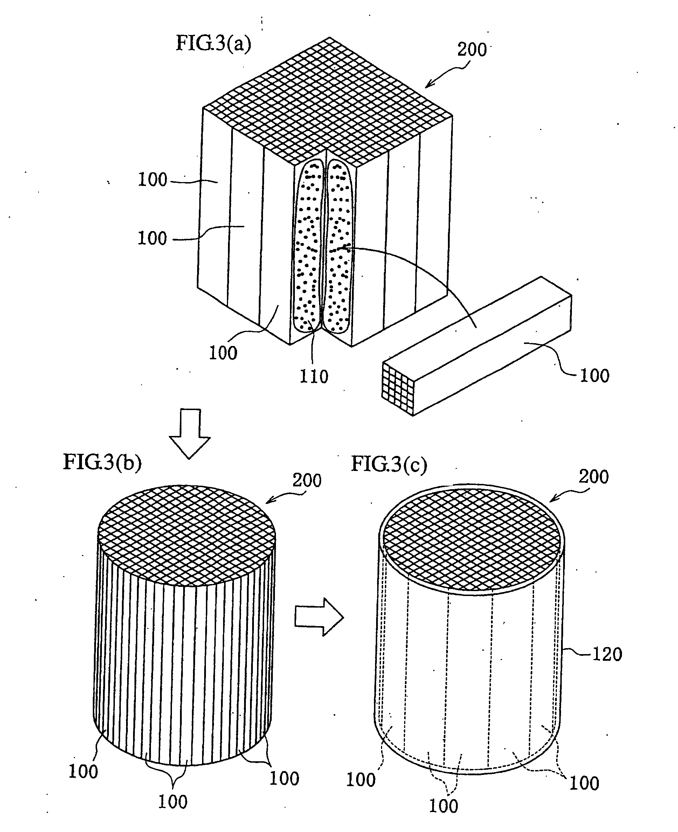

Then, 16 filters are provided every each filter 100 of Examples 2-1, 2-2 and 2-3 and Comparative Examples 2-1 and 2-2 and adhered to each other through a ceramic paste 110 of 1 mm in thickness and dried at 150°C for 1 hour, which is cut into a columnar form having an outer diameter of 144 mm as shown in FIG. 3, and an outer peripheral face thereof is coated with the same ceramic paste 120 at a thickness 1 mm and dried at 150°C for 1 hour to prepare a filter for the purification of an exhaust gas as an aggregate 200.

Moreover, the ceramic paste is used by well mixing 35 wt% of silica-alumina fibers, 8 wt% of silica sol, 2 wt% of carboxymethyl cellulose, 55 wt% of SiC (average particle size: 0.5 µm with 10 wt% of water.

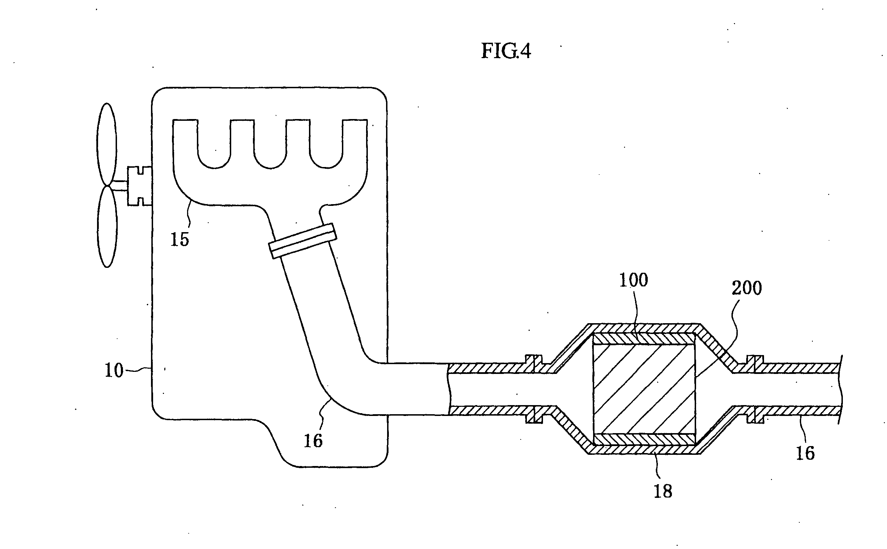

Each of the filters 200 for the purification of an exhaust gas is disposed in a casing 18 arranged on the course of an exhaust pipe 16 connected to an exhaust manifold 15 of a general engine 10 having a displacement of 2 liters as shown in FIG. 4, and an exhaust gas of 480°C is introduced thereinto at a state of no load of 3000 rpm (0 Nm) to measure a temperature difference (maximum temperature difference) between a central portion and a peripheral portion (about 10 mm from an outer periphery) and a maximum temperature of the central portion. The measured results are shown in Table 4.

**(Table 4)**

| | Thermal conductivity | Maximum temperature | Temperature difference |
|---|---|---|---|
| Example 2-1 | 60 w/mk | 500 °C | 15 °C |
| Example 2-2 | 30 w/mk | 540 °C | 20 °C |
| Example 2-3 | 13 w/mk | 550 °C | 25 °C |
| Comparative Example 2-1 | 2.5 w/mk | 600 °C | 50 °C |
| Comparative Example 2-1 | 80 w/mk | 400 °C | 5 °C |

| A filter of 60% A5 | | | |
|---|---|---|---|
| | Thermal conductivity | Maximum temperature | Temperature difference |
| Example 2-4 | 53 w/mk | 489 °C | 13 °C |
| Example 2-5 | 26 w/mk | 531°C | 17 °C |
| Example 2-6 | 10 w/mk | 546 °C | 22 °C |
| Comparative Example 2-3 | 2.6 w/mk | 600 °C | 50 °C |
| Comparative Example 2-4 | 72 w/mk | 408 °C | 9 °C |

As seen from the measured results, the filter for the purification of an exhaust gas obtained by aggregating the filters of each of Examples 2-1 to 2-3 containing copper in the catalyst coat layer as a high thermal conductive substance largely improves the thermal conduction of the filter as compared with the filter of Comparative Example 2-1 having no catalyst coat layer though the porosity of the porous ceramic carrier constituting the filter is as high as 60%, so that in the filter for the purification of the exhaust gas consisting of the filter aggregate, the maximum temperature in the central portion is 500-550°C, which is slightly lower than that of Comparative Example 2-1, while the temperature difference between the central portion and the peripheral portion is 15-25°C, which is largely smaller than 50°C of Comparative Example 2-1.

Also, in the filter aggregate of Comparative Example 2-2 containing a greater amount of copper in the catalyst coat layer, the temperature difference between the central portion and the peripheral portion is 5°C, which is fairly smaller than those of Examples 2-1 to 2-3, while the maximum temperature in the central portion is 400°C, which can not burn the soot sufficiently.

Therefore, according to the above embodiments, the thermal conductivity as a whole of the filter can be increased by including copper into the catalyst coat layer as a high thermal conductive substance though the ceramic carrier is high in the porosity, whereby heat enough to the catalyst activity can be given to the whole of the filter, whereby the whole of the filter can be uniformly burnt. Also, heat can be rapidly transferred behind in the burning, so that the maximum temperature is suppressed and hence the catalyst is hardly subjected to sintering. As a result, even if the test of catching and regeneration is repeated, the burnt residue is not caused, and hence there can be obtained a filter having an excellent durability as a whole.

### (Example 3) High refractive index substance containing example

In this example, a filter for the purification of an exhaust gas is prepared by forming an alumina coat layer containing titania as a high refractive index substance on a surface of a porous ceramic carrier (cordierite) having a different porosity, and a thermal conductivity is measured by the laser flash method and also a brightness is measured by a spectral colorimeter.

At first, a starting material of the porous ceramic carrier having a different porosity is formed by compounding 40%, 10%, 17%, 16% and 15% of talc, kaolin, alumina, aluminum hydroxide and silica having average particle sizes as shown in Table 5, respectively, and further compounding about 0-52 parts by weight of graphite having an average particle size of about 10 µm as a pore forming material, 6-40 parts by weight of methylcellulose as a shaping assistant, and 16-36 parts by weight of a dispersion medium consisting of an organic solvent and water based on 100 parts by weight of ceramic powder.

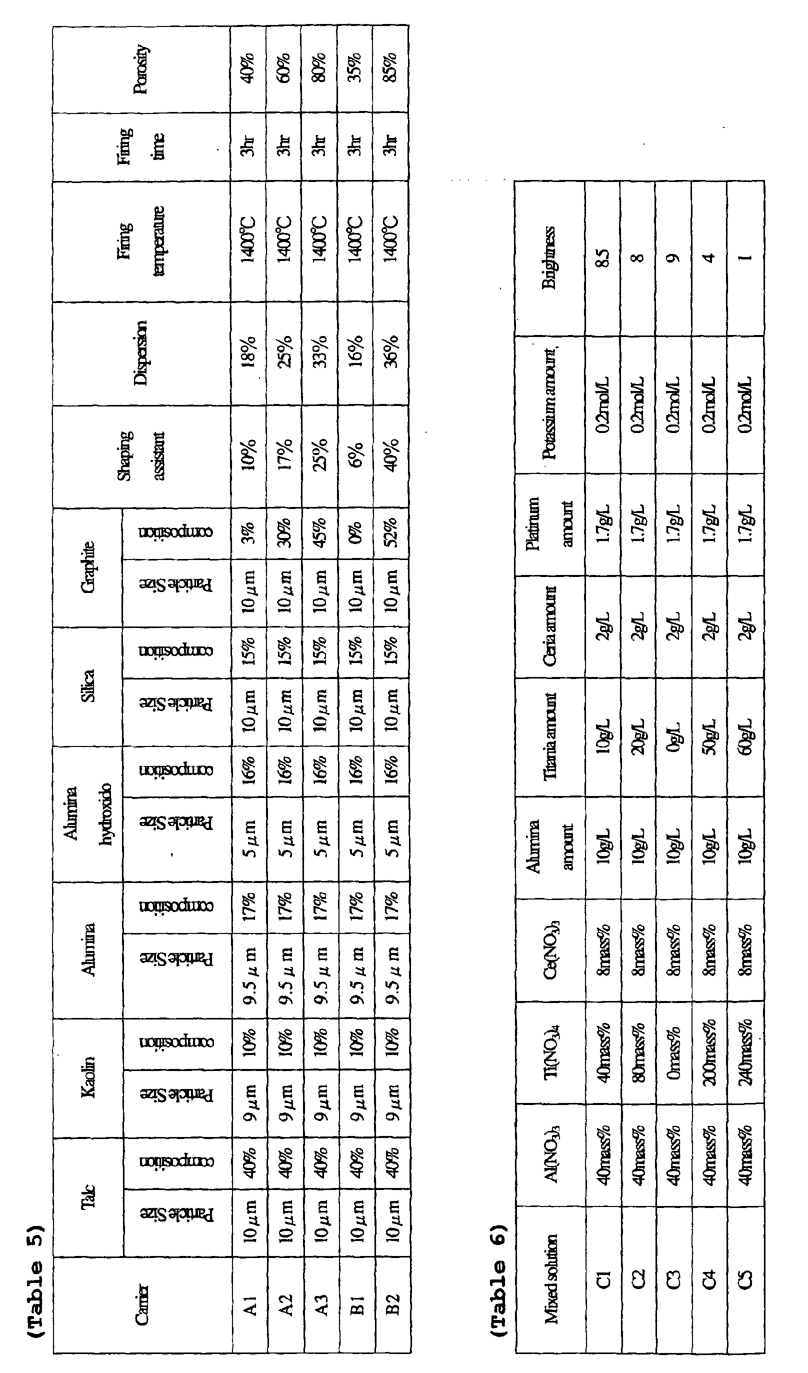

The starting material is kneaded and shaped into a honeycomb form through an extrusion shaping and a part of the resulting cell 101 is sealed in a checkered pattern.

Then, the shaped body is dried and degreased at 450°C for 3 hours and fired in an argon atmosphere at 1400°C for 3 hours to produce a porous ceramic (cordierite) carrier having a cell wall of 0.3 mm, a cell density of 200 cells/square inch and a porosity of 35%, 40%, 60%, 80% or 85%.

Moreover, ceramic carriers having porosities of 40%, 60% and 80% are A1, A2 and A3, respectively, and ceramic carriers having porosities of 35% and 85% are B1 and B2, respectively.

Then, the aqueous mixed solutions C1-C5 of Al(NO₃)₃-Ti(NO₃)₄-Ce(NO₃)₃ having various concentrations as shown in Table 2 are impregnated into the porous ceramic carriers A1, A2, A3, B1, B2 through a sol-gel method, respectively, to form alumina coat layer containing titania as a high refractive index substance and ceria as a rare earth oxide, and thereafter 1.7 g/l of platinum as an active component and 0.2 mol/l of potassium as a NOx occluding catalyst are carried on the surface of the alumina coat layer to form 5x5 = 25 kinds of filters for the purification of an exhaust gas, and thereafter thermal conductivites thereof are measured through a laser-flash method according to JIS R1611 and also brightnesses are measured by means of a spectral colorimeter.

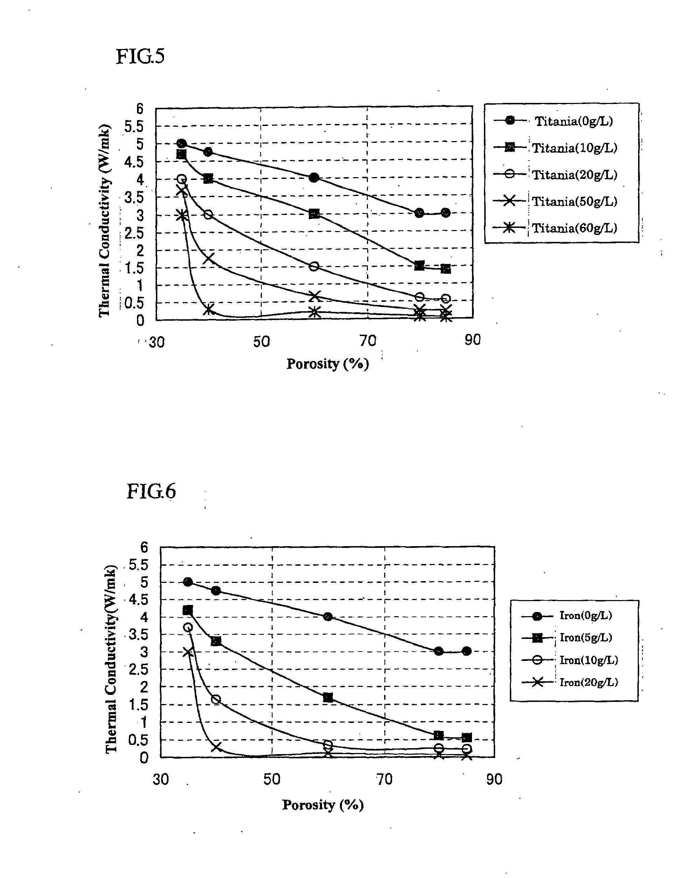

The measured results on the thermal conductivity in 25 kinds of the filters for the purification of an exhaust gas are shown in Table 7 and FIG. 5, and the measured results on the brightness are shown in Table 6.

Moreover, the thermal conductivities of the filters having titania contents of 10 g/l, 20 g/l, 0 g/l, 50 g/l and 60 g/l prepared by using the aqueous mixed solution C1, C2, C3, C4, C5 are shown by symbol ■, symbol ○, symbol ●, symbol × and symbol 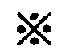 in FIG. 5, respectively.

**(Table 7)**

| Carrier (Porosity% ) | Thermal conductivity (W/m · k) | | | | |
|---|---|---|---|---|---|
| | Titania (0g/L) | Titania (10g/L) | Titania (20g/L) | Titania (50g/L) | Titania (64g/L) |
| B1 (35) | 5 | 4.7 | 4 | 3.7 | 3 |
| A1 (40) | 4.75 | 4 | 3 | 1.75 | 0.3 |
| A2 (6 0) | 4 | 3 | 1.5 | 0.65 | 0.2 |
| A3 (80) | 3 | 1.5 | 0.6 | 0.25 | 0.075 |
| B2 (85) | 3 | 1.4 | 0.55 | 0.23 | 0.05 |

As seen from these measured results, it is possible to lower the thermal conductivity by adding the high refractive index substance.

### (Example 4) High refractive index substance containing example

In this example, filters for the purification of an exhaust gas are prepared by forming an alumina coat layer containing Fe₂O₃ as a pigment instead of titania as the high refractive index substance on the surfaces of the porous ceramic carriers (cordierite) A1, A2, A3, B1, B2 having different porosities as prepared in Example 3, and thermal conductivities thereof are measured through a laser-flash method and further brightnesses are measured by means of a spectral colorimeter.

At first, aqueous mixed solutions D1-D4 of Al(NO₃)₃-Fe(NO₃)₃-Ce(NO₃)₃ having various concentrations as shown in Table 8 are impregnated into the ceramic carriers (cordierite) A1, A2, A3, B1, B2 through a sol-gel method, respectively, to form an alumina coat layer containing Fe₂O₃ as a pigment and ceria as a rare earth oxide on the surface of the ceramic carrier.

Thereafter, 1.7 g/l of platinum as an active component and 0.2 mol/l of potassium as a NOx occluding catalyst are carried on the surface of the alumina coat layer to prepare 5x4=20 kinds of filters for the purification of an exhaust gas, and then thermal conductivities thereof are measured through a laser-flash method according to JIS R1611 and brightnesses are also measured by means of a spectral colorimeter.

The measured results on the thermal conductivity in 20 kinds of the filters for the purification of an exhaust gas are shown in Table 9 and FIG. 6, and the measured results on the brightness are shown in Table 8.

**(Table 8)**

| Mixed Solution | Al(NO₃)₃ | Fe(NO₃)₃ | Ce(NO₃)₂ | Alumina amount | Iron amount | Ceria amount | Platinum amount | Potassium amount | Brightness |
|---|---|---|---|---|---|---|---|---|---|
| D1 | 40 mass% | 20 mass% | 8 mass% | 10g/L | 5g/L | 2g/L | 1.7g/L | 0.2 mol/L | 8 |
| D2 | 40 mass% | 40 mass% | 8 mass% | 10g/L | 10g/L | 2g/L | 1.7g/L | 0.2 mol/L | 3 |
| D3 | 40 mass% | 0 mass% | 8 mass% | 10g/L | 0g/L | 2g/L | 1.7g/L | 0.2 mol/L | 9 |
| D4 | 40 mass% | 80 mass% | 8 mass% | 10g/L | 20g/L | 2g/L | 1.7g/L | 0.2 mol/L | 1 |

**(Table 9)**

| Carrier (Porosity %) | Thermal conductivity (W/m·K) | | | |
|---|---|---|---|---|
| | Iron(0g/L) | Iron(5g/L) | Iron(10g/L) | Iron(20g/L) |
| B1 (3 5) | 5 | 4.2 | 3.7 | 3 |
| A1 (4 0) | 4.75 | 3.3 | 1.65 | 0.3 |
| A2 (60) | 4 | 1.7 | 0.35 | 0.125 |
| A3 (80) | 3 | 0.6 | 0.25 | 0.075 |
| B2 (8 5) | 3 | 0.55 | 0.23 | 0.05 |

Moreover, the thermal conductivities of the filters having Fe₂O₃ contents of 5 g/l, 10 g/l, 0 g/l and 20 g/l prepared by using the aqueous mixed solution D1, D2, D3, D4 are shown by symbol ■, symbol ○, symbol ●, and symbol × in FIG. 6, respectively.

As seen from the measured results, it is possible to lower the thermal conductivity by coloring with the pigment.

### (Example 5)

In order to confirm the function and effect of the aggregate of the filters for the purification of an exhaust gas according to the invention, in this example, the filter aggregate is mounted onto an exhaust pipe of an actual diesel engine and then a temperature difference (maximum temperature difference) between a central portion and a peripheral portion thereof and a maximum temperature of the central portion are measured.

At first, an alumina coat layer having a titania content of 10 g/l, 20 g/l, 50 g/l or 60 g/l is formed on the ceramic carrier A2 having a porosity of 60% by using the aqueous mixed solution C1, C2, C4 or C5, and 1.7 g/l of platinum as an active component and 0.2 mol/l of potassium as a NOx occluding catalyst are carried on the surface thereof to prepare a filter (Examples 5-1, 5-2, 5-3, 5-4), and an alumina coat layer having a Fe₂O₃ content of 5 g/l, 10 g/l or 20 g/l is formed on the ceramic carrier A2 having a porosity of 60% by using the aqueous mixed solution D1, D2 or D4, and 1.7 g/l of platinum as an active component and 0.2 mol/l of potassium as a NOx occluding catalyst are carried on the surface thereof to prepare a filter (Examples 5-5, 5-6, 5-7), while there are prepared a filter in which an alumina coat layer containing no titania or Fe₂O₃ is formed on the ceramic carrier A2 having a porosity of 60% and platinum as an active component and potassium as a NOx occluding catalyst are carried on the surface to prepare a filter (Comparative Example 5-1).

Then, 16 filters are provided every each filter 100 of Examples 5-1 to 5-7 and Comparative Example 5-1 and adhered to each other through a ceramic paste 110 of 1 mm in thickness and dried at 150°C for 1 hour, which is cut into a columnar form having an outer diameter of 144 mm as shown in FIG. 3, and an outer peripheral face thereof is coated with the same ceramic paste 120 at a thickness 1 mm and dried at 150°C for 1 hour to prepare a filter for the purification of an exhaust gas as an aggregate 200.

Moreover, the ceramic paste is used by well mixing 35 wt% of silica-alumina fibers, 8 wt% of silica sol, 2 wt% of carboxymethyl cellulose, 55 wt% of SiC (average particle size: 0.5 µm with 10 wt% of water.

Each of the filters 200 for the purification of an exhaust gas is disposed in a casing 18 arranged on the way of an exhaust pipe 16 connected to an exhaust manifold 15 of a general engine 10 having a displacement of 2 liters as shown in FIG. 4, and an exhaust gas is introduced thereinto at a state of no load of 3000 rpm (0 Nm) to measure a temperature difference (maximum temperature difference) between a central portion and a peripheral portion (about 10 mm from an outer periphery) and a maximum temperature of the central portion. The measured results are shown in Table 10.

**(Table 10)**

| | TiO₂ amount | Fe₂O₃ amount | Thermal conductivity | Brightness | Exhaust gas temperature 300°C | | Exhaust gas temperature 600°C | |
|---|---|---|---|---|---|---|---|---|
| | | | | | Maximum temperature | Temperature difference | Maximum temperature | Temperature difference |
| Example 5-1 | 10g/L | 0g/L | 3w/mK | 8.5 | 280 °C | 20 °C | 580 °C | 15 °C |
| Example 5-2 | 20g/L | 0g/L | 1.5w/mK | 8 | 300 °C | 30 °C | 610 °C | 25 °C |
| Example 5-3 | 50g/L | 0g/L | 0.6w/mK | 4 | 300 °C | 40 °C | 650 °C | 30 °C |
| Example 5-4 | 60g/L | 0g/L | 0.2w/mK | 1 | 315 °C | 55 °C | 670 °C | 45 °C |
| Example 5-5 | 0g/L | 5g/L | 1.7w/mK | 8 | 300 °C | 55 °C | 600 °C | 45 °C |
| Example 5-6 | 0g/L | 10g/L | 0.3w/mK | 3 | 310 °C | 35 °C | 670 °C | 30 °C |
| Example 5-7 | 0g/L | 20g/L | 0.12w/mK | 1 | 320 °C | 70 °C | 680 °C | 50 °C |
| Comparative Example 5-1 | 0g/L | 0g/L | 4w/mK | 9 | 250 °C | 15 °C | 500 °C | 25 °C |

As seen from the measured results, the temperature of the filter can be made higher than that of the exhaust gas by lowering the thermal conductivity. The filter using titania as a high refractive index substance particularly shows a strong heat insulating property at a higher temperature though the brightness is lowered and hence the maximum temperature becomes higher. However, the temperature difference at the high temperature is hardly caused.

Therefore, there can be obtained the following effects according to the embodiments of the invention.
(1) The ceramic filter according to the embodiments is high in the heat insulating property though the porosity is as high as 40-80%, so that the time arriving at the catalyst activating temperature can be shortened. Therefore, a system having an excellent reproduction efficiency can be formed.
(2) In the ceramic filter according to the embodiments, the thermal conduction is suppressed, so that partial burning is caused in any places and the whole of the filter is burnt at once and the violent temperature difference is not caused. Therefore, the violent temperature gradient hardly occurs and the durability of the filter can be improved.

### INDUSTRIAL APPLICABILITY

As mentioned above, the invention can provide a filter for the purification of an exhaust gas, particularly an exhaust gas filter for a diesel engine, in which although the ceramic carrier carrying the catalyst is high (40-80%) in the porosity, the catalyst coat layer has a high thermal conductivity or develops a high heat insulating property, so that the pressure loss is small in the deposition of soot and the thermal responsibility of easily arriving at a temperature suitable for the catalyst activity and hardly dropping down is high and the durability is excellent.

## Claims

1. A filter for the purification of an exhaust gas provided with a catalyst coat layer formed by carrying a catalyst active component on a surface of a porous ceramic carrier, wherein the porous ceramic carrier has a porosity of 40-80% and a thermal conductivity as a filter is 0.3-60 W/mk.

2. A filter for the purification of an exhaust gas according to claim 1, wherein the thermal conductivity of the filter is 3-60 W/mk.

3. A filter for the purification of an exhaust gas according to claim 1 or 2, wherein the catalyst coat layer is made of at least one oxide ceramic selected from alumina, titania, zirconia and silica.

4. A filter for the purification of an exhaust gas according to claim 1 or 2, wherein the catalyst coat layer contains at least one metal having a thermal conductivity higher than the oxide ceramic selected from copper, gold, silver and aluminum or an alloy thereof, or at least one ceramic selected from aluminum nitride, silicon carbide and silicon nitride.

5. A filter for the purification of an exhaust gas according to claim 1 or 2, wherein the catalyst coat layer is carried with at least one catalyst active component selected from a noble metal, an alkali metal, an alkaline earth metal and a rare earth oxide.

6. A filter for the purification of an exhaust gas according to claim 1 or 2, wherein the porous ceramic carrier is constituted with at least one ceramic selected from silicon carbide, silicon nitride, cordierite, mullite, sialon, silica, aluminum titanate, lithium aluminum silicate (LAS) and zirconium phosphate.

7. A filter for the purification of the exhaust gas according to claim 1, wherein the catalyst coat layer is made of at least one oxide ceramic selected from alumina, titania, zirconia and silica and contains a substance having a refractive index larger that that of the oxide ceramic, and a thermal conductivity as the filter is 0.3-3 W/mk.

8. A filter for the purification of an exhaust gas according to claim 1, wherein the catalyst coat layer is made of at least one oxide ceramic selected from alumina, titania, zirconia and silica and contains a pigment colored itself, and a thermal conductivity as the filter is 0.3-3 W/mk.

9. A filter for the purification of an exhaust gas according to claim 7, wherein the substance having a refractive index larger than that of the oxide ceramic is at least one substance having a refractive index of not less than 1.4 and selected from TiO₂, BaTiO₃, PbS, Fe₂O₃, CoCO₃ and MnO₂.

10. A filter for the purification of an exhaust gas according to claim 1, 7 or 8, wherein the catalyst coat layer contains inorganic powder having a peak in a portion that a reflectance against an electromagnetic wave of not less than 10 µm is not less than 70%.

11. A filter for the purification of an exhaust gas according to claim 8, wherein the pigment is compounded so that a brightness of the catalyst coat layer as a whole is not more than 8.

12. A filter for the purification of an exhaust gas according to claim 1 or 8, wherein the pigment is at least one inorganic metal selected from iron oxide, copper oxide and a cobalt compound of CoO·nAl₂O₃ or Co₃(PO₄)₂.

13. A filter for the purification of an exhaust gas according to claim 1, 7 or 8, wherein the porous ceramic carrier is made of at least one ceramic selected from silicon carbide, silicon nitride, cordierite, mullite, sialon, silica, aluminum titanate, lithium aluminum silicate (LAS) and zirconium phosphate.

14. A filter for the purification of an exhaust gas according to claim 7 or 8, wherein the catalyst coat layer is made of at least one oxide ceramic selected from alumina, titania, zirconia and silica.

15. A filter for the purification of an exhaust gas according to claim 7 or 8, wherein the catalyst coat layer is carried with at least one catalyst selected from a noble metal, an alkali metal, an alkaline earth metal and rare earth oxide.
